# EUROPÄISCHE PATENTANMELDUNG

(11) **EP 1 717 130 A1**
(43) Veröffentlichungstag der Anmeldung: **02.11.2006**
(21) Anmeldenummer: 05008984.6
(22) Anmeldetag: 25.04.2005
(51) Int. Cl.: B62D 25/14

(54) **Instrumententafelträgerstruktur**

(71) Anmelder: Alcan Technology & Management Ltd., 8212 Neuhausen am Rheinfall (CH)
(72) Erfinder: Gallasch, Olaf, 78224 Singen (DE)

(57) **Zusammenfassung**

Die Erfindung betrifft eine Instrumententafelträgerstruktur (1) eines Kraftfahrzeugs, enthaltend eine an die beiden seitlichen Fahrzeugstrukturen angebundene Querträgerstruktur, mit einem im fahrerseitigen Bereich verlaufenden Hauptträger (2), einen fahrerseitig angeordneten Lagerbock (11) zur Anbindung einer Lenkeinrichtung sowie einen Verbindungskörper (7) zur Anbindung der Querträgerstruktur an eine frontseitige Fahrzeugstruktur. Die Erfindung zeichnet sich dadurch aus, dass der Verbindungskörper (7) eine erste Aufnahmefläche (9) ausbildet, welche der Hauptträger (2) flächig anliegt, und eine zweite Aufnahmefläche (15) ausbildet, welcher der Lagerbock (11) flächig anliegt, wobei der Hauptträger (2) und Lagerbock (11) über eine lösbare oder nicht lösbare Verbindung (13, 16) mit dem Verbindungskörper (7) verbunden sind, und der Verbindungskörper (7) zur Fahrzeugfront hin einen verlängerten Fortsatz (12) zur Anbindung des Verbindungskörpers (7) an eine frontseitige Fahrzeugstruktur enthält.

## Beschreibung

Vorliegende Erfindung betrifft eine Instrumententafelträgerstruktur eines Kraftfahrzeuges, enthaltend eine an die beiden seitlichen Fahrzeugstrukturen angebundene Querträgerstruktur, mit einem im fahrerseitigen Bereich verlaufenden Hauptträger, einen fahrerseitig angeordneten Lagerbock zur Anbindung einer Lenkeinrichtung sowie einen Verbindungskörper zur Anbindung der Querträgerstruktur an eine frontseitige Fahrzeugstruktur.

Instrumententafelträgerstrukturen werden in der Automobilindustrie im Karosseriebau verwendet. Als Teil der Kraftfahrzeugkarosserie ist die Instrumententafelträgerstruktur, nachfolgend der Einfachheit halber Instrumententafelträger genannt, zwischen den sogenannten A-Säulen, den ersten Säulen in der Seitenwand des Fahrzeuges, die zur Aufnahme einer Vordertüre dienen, angeordnet und über diese mit der Karosserie des Fahrzeuges verbunden. Der Instrumententafelträger ist im Bereich unterhalb der Windschutzscheibe etwa horizontal verlaufend angeordnet.

Der Instrumententafelträger dient zur Befestigung sowie zur Aussteifung der Instrumententafel. Am Instrumententafelträger sind unter anderem Halterungen vorgesehen, an denen die Instrumententafel bzw. Komponenten davon sowie eine Lenkeinrichtung befestigt werden.

Zur Aussteifung des Instrumententafelträgers ist dieser in der Regel über eine Stützstrebe gegen den Fahrzeugboden, insbesondere gegen den sogenannten Mitteltunnel hin, zusätzlich abgestützt.

Die Hauptkräfte, wie die Abstützkraft, welche durch den Fahrer über die Lenkung ausgeübt wird, sowie die Gewichtskraft durch die Instrumententafel und die Lenkeinrichtung, werden hauptsächlich im Bereich der Fahrerseite auf den Instrumententafelträger übertragen, während die Belastungen auf der Beifahrerseite geringer sind. Der Instrumententafelträger ist daher fahrerseitig üblicherweise lokal verstärkt. Die Verstärkung kann z. B. durch eine zusätzliches Verstärkungsprofil parallel zum Hauptträger, durch eine Änderung im Trägerquerschnitt oder durch eine Änderung in der Profilwanddicke erreicht werden.

Die Konstruktionsweise einer lokal gezielt verstärkten Trägerstruktur dient der Gewichtsoptimierung der Instrumententafel. Ferner sind die Platzverhältnisse in der Instrumententafel in der Regel eingeschränkt, so dass zusätzliche Verstärkungsmassnahmen ausschliesslich nur an jenen Trägerabschnitten vorgenommen werden können, an welchen diese erforderlich sind.

Der Instrumententafelträger ist in der Regel aus einer Vielzahl von Unterbauteilen zusammengesetzt, welche z. B. Extrusionsteile, Blechteile oder Gussteile umfassen. Die Herstellung eines Instrumententafelträgers aus einer Mehrzahl von Unterbauteilen ist äusserst aufwendig und komplex. Überdies weisen solche Strukturen eine Vielzahl von Fügestellen auf, welche potentielle Schwachstellen ausbilden. Es ist daher wünschenswert die Anzahl der Unterbauteile soweit wie möglich zu reduzieren und gleichzeitig den Komplexitätsgrad der Trägerstruktur zu senken.

Andererseits sind jedoch auch Konstruktionen erwünscht, welche den Einsatz eines Instrumententafelträgers in verschiedenen Fahrzeugtypen erlaubt, indem lediglich einzelne Komponenten nicht jedoch die gesamte Struktur an die unterschiedlichen Fahrzeuggeometrien und insbesondere an die unterschiedliche Anordnung der Lenkeinrichtung angepasst werden müssen.

Der Erfindung liegt deshalb die Aufgabe zugrunde, einen Instrumententafelträger vorzuschlagen, welcher aus möglichst wenig Einzelteilen besteht sowie mit wenig Aufwand an unterschiedliche Lenkungsanordnungen angepasst werden kann und überdies auch bei kleineren Stückzahlen wirtschaftlich herstellbar ist.

Erfindungsgemäss wird die Aufgabe dadurch gelöst, dass der Verbindungskörper eine erste Aufnahmefläche ausbildet, welcher der Hauptträger flächig anliegt, und eine zweite Aufnahmefläche ausbildet, welcher der Lagerbock flächig anliegt, wobei der Hauptträger und Lagerbock über eine lösbare oder nicht lösbare Verbindung mit dem Verbindungskörper verbunden sind, und der Verbindungskörper zur Fahrzeugfront hin einen verlängerten Fortsatz zur Anbindung an die frontseitige Fahrzeugstruktur enthält.

Lösbare Verbindungen können bsp. Schraubverbindungen sein. Nicht lösbare Verbindungen können beispielsweise Schweiss-, Klebe- oder Nietverbindung sein. Die Verbindung kann auch aus einer Kombination der vorgenannten Verbindungstechniken sein.

Der Hauptträger und/oder der Lagerbock sind bevorzugt über wenigstens eine Schweissverbindung entlang ihrer frei liegenden Kontaktlinien, insbesondere entlang der in Fahrzeugquerrichtung verlaufenden Kontaktlinien, mit dem Verbindungskörper verbunden. Die Schweissnaht kann durchgehend oder abschnittsweise ausgebildet sein.

Die erste Aufnahmefläche wiedergibt bevorzugt im wesentlichen die Kontur der dem Verbindungskörper anliegenden Aussenfläche des Hauptträgers. D. h. die Aufnahmefläche ist bevorzugt gegengleich zu der dem Verbindungskörper anliegenden Aussenfläche des Hauptträgers ausgebildet. Die Aufnahmefläche bildet bevorzugt eine Auflagefläche aus, welcher der Hauptträger der Schwerkraft folgend aufliegt.

In einer Weiterbildung der Erfindung bildet die Aufnahmefläche eine rinnenartige Vertiefung aus, in welcher der Hauptträger eingebettet ist. Die rinnenartige Vertiefung kann z. B. U-, V- oder C-förmig sein, bzw. die Querschnittgeometrie des Trägerprofils im Auflagebereich wiedergeben. Die Öffnung der Rinne kann dachwärtig oder seitwärts angeordnet sein. Der Hauptträger kann in die Rinne eingelegt oder stirnseitig in diese eingeschoben sein, Die Aufnahmefläche kann auch durch eine querschnittlich geschlossene Kammer des Verbindungskörpers ausgebildet sein, welche vorzugsweise die Querschnittgeometrie des Trägerprofils wiedergibt, wobei in diesem Fall der Hauptträger stimseitig in die besagte Kammer hindurch geschoben ist,

Die zweite Aufnahmefläche wiedergibt bevorzugt im wesentlichen die Kontur der dem Verbindungskörper anliegenden Aussenfläche des Lagerbocks, D, h. die Aufnahmefläche ist bevorzugt gegengleich zu der dem Verbindungskörper anliegenden Aussenfläche des Lagerbocks ausgebildet. Die Aufnahmefläche ist bevorzugt eine bodenwärtig angeordnete Fläche am Verbindungskörpers, so dass der Verbindungskörper oberhalb des Lagerbocks angeordnet ist. Die Aufnahmefläche bildet bevorzugt eine Anlagefläche, insbesondere eine ebene Anlagefläche aus, welcher der Lagerbock, insbesondere mit einer ebenen Stossfläche, anliegt. Die Ausrichtung der Anlagefläche am Verbindungskörper bestimmt die Neigung des Lagerbokkes und somit die Führung der Lenkstange.

Die beiden ersten und zweiten Aufnahmeflächen sind bevorzugt Teil eines Distanzabschnitts am Verbindungskörper, welcher zwischen Hauptträger und Lagerbock angeordnet ist. Die beiden Bauteile sind dadurch in vertikaler Distanz (Boden-Dach-Richtung) zueinander platziert. Der Distanzabschnitt kann als Fortsatz, insbesondere als nasenförmiger Fortsatz, am Verbindungskörper ausgebildet sein. Die Geometrie des Distanzabschnitts bestimmt die Position des Lagerbockes relativ zum Hauptträger und zwar sowohl hinsichtlich der Distanz zu diesem, wie auch hinsichtlich der Neigung.

Der verlängerte Fortsatz zur Anbindung des Verbindungskörpers an die frontseitige Fahrzeugstruktur ist bevorzugt ein sich bis zur Anbindungsstelle an der frontseitigen Fahrzeugstruktur erstreckendes Armelement. Dieses übemimmt unter anderem die Funktion einer Frequenzstrebe.

Das Armelement ist bevorzugt als integraler Bestandteil des Verbindungskörpers ausgebildet. Das Armelement kann jedoch auch ein über eine Anbindungsstelle am Verbindungskörper mittels lösbarer (Schrauben, Nieten) oder nicht lösbarer (Schweissen, Kleben) Verbindung befestigtes Bauteil sein.

Der Verbindungskörper ist bevorzugt einstückig gefertigt und beinhaltet das Armelement sowie der die Anbindungsflächen für den Hauptträger und den Lagerbock ausbildende Distanzabschnitt. Der Verbindungskörper ist bevorzugt ein Strangpressprofil aus einem Metall, insbesondere einem Leichtmetall, wie Alumimium oder einer Legierung davon, oder aus Stahl. Der Verbindungskörper kann jedoch auch aus gefügten Blechelementen oder einem Gussteil gefertigt sein oder aus einem Kunststoff, insbesondere aus einem faserverstärkten Kunststoff, bestehen.

Die Pressrichtung des Strangpressproduktes liegt im wesentlichen in Fahrzeugquerrichtung. Der Verbindungskörper als Strangpressprodukt weist bevorzugt eine oder mehrere, insbesondere vier Hohlkammem auf, welche durch Profilstege begrenzt werden. Der Verbindungskörper kann seitlich z. B. mittels Sägen oder Fräsen in die gewünschte Form zugeschnitten sein. Der Verbindungskörper kann z.B. in Richtung Fahrzeugfront sich verjüngend zugeschnitten sein. Der Verbindungskörper weist bevorzugt einen fachwerkartigen Aufbau aus, wobei der Distanzabschnitt und das Armelement durch Profilkammern ausgebildet werden.

Der Lagerbock, auch Lenksäulenhalterung genannt, dient zur Anbindung der Lenksäule an die Instrumententafel. Der Lagerbock ist bevorzugt ein zum Fahrzeugboden hin offenes, U-förmiges Bauteil mit zwei, vorzugsweise vertikal ausgerichteten, Seitenwänden und einer die beiden Seitenwände miteinander verbindenden Auflagefläche zur Anbindung an den Lagerbock. In den Eckbereichen zwischen einer Seitenwand und der Auflagefläche kann eine versteifend wirkende Hohlkammer vorgesehen sein.

Der Hauptträger entspricht dem die beiden Fahrzeugseiten verbindenden Querträger der Instrumententafel. Der Hauptträger ist bevorzugt über seitliche Verbindungslemente, insbesondere über Seitenhalter, mit der vorderen Innenkarosserie, insbesondere der A-Säule, des Fahrzeuges verbunden. Der Hauptträger kann aus einem durchgehenden, die beiden Seitenwände verbindenden Profil, sein. Er kann auch mehrteilig aus miteinander, z. B. mittels Schweissen, verbundenen Profilabschnitten bestehen. Der Hauptträger ist bevorzugt ein Ein- oder Mehrkammerhohlprofil. Der Hauptträger kann ein Strangpressprofil oder längsnahtgeschweisstes Hohlprofil aus einem Metall, wie Stahl, Aluminium oder einer Legierung davon sein. Ferner kann das Hauptprofil Biegeabschnitte aufweisen, welche über weitere Umformschritte, wie Innenhochdruckumformen oder Biegeformen in das Profil eingebracht werden können.

Der Hauptträger ist ferner bevorzugt über eine Stützstrebe zum Fahrzeugboden, insbesondere zum Mitteltunnel hin, zusätzlich abgestützt.

Der Instrumententafelträger kann fahrerseitig eine Verstärkungsstruktur enthalten. Die Verstärkungsstruktur kann aus einem oder mehreren zusätzlichen Verstärkungsprofilen ausgebildet sein. Die Verstärkungsprofile können unter Aussteifung der Trägerstruktur zwischen Lagerbock und fahrerseitigem Verbindungselement sowie zwischen Lagerbock und der Stützstrebe angeordnet sein und diese miteinander verbinden. In einer spezifischen Weiterbildung der Erfindung besteht die Verstärkungsstruktur aus jeweils einem zwischen einer ersten Seitenwand des Lagerbockes und einem seitlichen Verbindungselement sowie einem zwischen einer zweiten Seitenwand des Lagerbocks und einem Stützprofil angeordneten und mit diesen verbundenen Verstärkungsprofil, Die Verstärkungsprofile sind bevorzugt mit dem Lagerbock sowie mit der Stützstrebe bzw. dem Verbindungselement verschweisst.

Das Verstärkungsprofil kann auch durchgehend ausgebildet sein und indirekt, d.h. über den Lagerbock, oder direkt mit dem Verbindungskörper verbunden sein,

Die Verstärkungsprofile und/oder die Stützstrebe sind bevorzugt Ein- oder Mehrkammerprofile aus Metall, wie Stahl, und insbesondere aus einem Leichtmetall, wie Aluminium oder einer Aluminiumlegierung. Sie können jedoch auch aus einem Kunststoff, insbesondere einem faserverstärkten Kunststoff sein.

Die Verstärkungsprofile und/oder die Stützstrebe können aus längsnahtgeschweissten Hohlprofilen oder aus Strangpressprofilen gefertigt sein. Ferner können die besagten Profile Biegeabschnitte oder Querschnittsänderungen aufweisen, welche über weitere Umformschritte, wie Innenhochdruckumformen oder Biegeformen in die Profile eingebracht werden.

Der Hauptträger, die Verstärkungsprofile und/oder die Stützstrebe können einen polygonalen, wie rechteckigen oder sechseckigen Querschnitt, oder einen rundlichen, bogenförmigen, insbesondere kreisförmigen, Querschnitt aufweisen. Ferner sind auch Kombinationen von polygonalen und bogenförmigen Profilaussenkonturen denkbar.

Der Instrumententafelträger kann weitere Halteelemente zur Anbindung von Funktionsgruppen, wie Beifahrer-Airbagsystem, Handschuhfach, Knieschutz, Innenraumbelüftung oder Klimatisierung enthalten.

Die frontseitige Fahrzeugstruktur ist bevorzugt eine in Frontrichtung vor dem Instrumententafelträger angeordnete Karosseriestruktur. Sie entspricht einem vorderen Teil der Innenkarosserie und kann bsp. als Scheibenquerträger, Stimwandpaneel oder Windschutzquerträger ausgebildet sein. Ferner kann die Fahrzeugstruktur im weitesten Sinne auch nicht stnrkturelle Fahrzeugkomponenten, wie Flüssigkeitstank (z.B Wassertank) umfassen, welche zur Anbindung des Verbindungskörpers geeignet sind.

Der erfindungsgemässe Instrumententafelträger weist einen vereinfachten modularen Aufbau bei gleichzeitig hoher Versteifung der Gesamtstruktur auf, indem ein Verbindungskörper eingesetzt wird, welcher einerseits den Querträger an die frontseitige Fahrzeugstruktur anbindet, und über welchen andererseits der Lagerbock an die Instrumententafel befestigt ist,

Der Instrumententafelsträger weist dank der Bauteilreduktion eine kompakte Bauweise auf, welche jedoch noch genügend Flexibilität lässt, die Instrumententafelträgerstruktur mit wenig Aufwand nach dem sogenannten Baukastenprinzip den unterschiedlichen Geometrien und Belastungen verschiedener Fahrzeugtypen anzupassen. Dazu kann beispielsweise der Verbindungskörper konstruktiv den unterschiedlichen Lenkungslagen im Fahrzeug in Höhe und Winkel angepasst werden, indem beispielsweise über die Gestaltung des Distanzabschnittes der Abstand zwischen Hauptträger und Lagerbock sowie die Neigung des Lagerbockes bestimmt werden kann. Ferner lässt sich über die Gestaltung des Armfortsatzes die Distanz zwischen Instrumententatelträger und der vorderen Fahrzeugstruktur einstellen. Die direkte Anbindung des Verbindungskörpers an die vordere Fahrzeugstruktur führt zudem zu einer hohen Steifigkeit des Gesamtsystems.

Die Erfindung betrifft im weiteren eine Trägerstruktur einer Instrumententafel mit einem fahrerseitig in Fahrzeugquerrichtung, insbesondere horizontal, verlaufenden ersten Trägerprofil, welches unter Ausbildung eines Biegeabschnittes aus der Fahrzeugquerrichtung zum Fahrzeugboden hin abgewinkelt ist und so eine integrierte Stützstrebe ausbildet.

In einer ersten Ausführungsvariante weist das erste, als Hohlprofil ausgebildete Trägerprofil im Biegeabschnitt eine Öffnung auf, in welche ein über die Beifahrerseite in Fahrzeugquerrichtung verlaufendes, zweites Trägerprofil eingeführt ist, Das zweite Trägerprofil kann entlang eines Teilabschnitts oder über die Gesamtlänge des ersten Trägerprofils in das erste Trägerprofil eingesteckt sein. Das zweite Trägerprofil soll im ersten Trägerprofil bevorzugt möglichst wenig Bewegungsfreiraum in radialer Richtung aufweisen und dem ersten Trägerprofil innenseitig satt anliegen. Der Aussenumfang des zweiten Trägerprofils entspricht bevorzugt im wesentlichen dem Innenumfang des ersten Trägerprofils, so dass das zweite Trägerprofil mit möglichst wenig Spiel im ersten Trägerprofil geführt ist. Das in das erste Trägerprofil eingeschobene zweite Trägerprofil führt auf diese Weise fahrerseitig zu einer Verstärkung der Trägerstruktur.

In Weiterbildung der Erfindung kann das erste Trägerprofil zusammen mit dem in dieses eingeschobene, zweiten Trägerprofil weiteren Umformschritten, wie Innenhochdruckumformen oder/oder Biegeformen unterzogen werden. Auf diese Weise können Biegeabschnitte und/oder Querschnittsänderungen in das erste und zweite Profil eingebracht werden.

Das zweite Trägerprofil ist im Bereich der Öffnung am ersten Trägerprofil bevorzugt durch eine umlaufende oder teilumlaufende Schweissverbindung mit dem ersten Trägerprofil verbunden. Das erste und zweite Trägerprofil können jedoch auch über andere lösbare oder nicht lösbare Verbindungstechniken, wie Schrauben oder Nieten, miteinander verbunden sein.

In einer zweiten Ausführungsvariante ist im Biegeabschnitt des ersten Trägerprofils ein über die Beifahrerseite in Fahrzeugquerrichtung verlaufendes, zweites Trägerprofil befestigt. Hierzu liegt das zweite Trägerprofil mit seiner Stirnseite dem Biegeabschnitt des ersten Trägerprofils an. Die dem ersten Trägerprofil anliegende Stirnseite des zweiten Trägerprofils ist bevorzugt der Kontur des ersten Trägerprofils im Biegeabschnitt entsprechend zugeschnitten und dieser angepasst, so dass sich eine möglichst umlaufende Kontaktlinie zwischen der Stirnseite des zweiten Trägerprofils und der Kontur des ersten Trägerprofils ergibt. Das zweite Trägerprofil ist unter Ausbildung einer umlaufenden oder teilumlaufenden Schweissnaht entlang der Kontaktlinie mit dem ersten Trägerprofil verschweisst.

Das erste und zweite Trägerprofil beider Ausführungsvarianten sind bevorzugt Ein oder Mehrkammerhohlprofile aus Metall, wie Stahl, und insbesondere aus einem Leichtmetall, wie Aluminium oder einer Aluminiumlegierung. Die Trägerprofile können aus längsnahtgeschweissten Hohlprofilen oder aus Strangpressprofilen sein.

Der aus einem ersten und zweiten Trägerprofil zusammengesetzte Hauptträger ist, vorzugsweise über seitlich angeordnete Verbindungselemente, an die seitliche Karosseriestruktur des Fahrzeuges angebunden. Die Trägerstruktur kann überdies im fahrerseitigen Bereich eine zusätzliche Verstärkungsstruktur enthalten.

An die Trägerprofile können weitere Bauteile, wie Lagerbock für die Lenksäulenanbindung, oder Halterungen zur Befestigung von Baugruppen, wie Beifahrer-Airbagsystem, Handschuhfach, Knieschutz, Innenraumbelüftung und/oder Klimatisierung, angebracht werden.

Die erfindungsgemässe Trägerstruktur kann mit der eingangs beschriebenen, einen Verbindungskörper beinhaltenden, Erfindungslösung kombiniert werden.

Die erfindungsgemässen Instrumententafelträgerstrukturen finden bevorzugt Anwendung in Kraftfahrzeugen wie Personenkraftwagen (PKW), Kastenwagen, Lieferwagen, Personentransporter, Vans und Kleinbusse.

Im folgenden wird die Erfindung beispielhaft und mit Bezug auf die beiliegenden Zeichnungen näher erläutert. Es zeigen:
- Fig. 1a:: eine perspektivische Ansicht eines ersten Instrumententafelträgers;
- Fig. 1b:: einen Querschnitt durch den Intrumententafelträger entlang der Linie A - A gemäss Fig. 1a;
- Fig. 2a:: eine perspektivische Ansicht eines zweiten Instrumententafelträgers;
- Fig. 2b:: einen Querschnitt durch den Intrumententafelträger entlang der Linie B - B gemäss Fig. 2a;
- Fig. 3:: eine perspektivische Ansicht eines dritten Instrumententafelträgers;
- Fig. 4:: eine perspektivische Ansicht eines vierten Instrumententafelträgers.

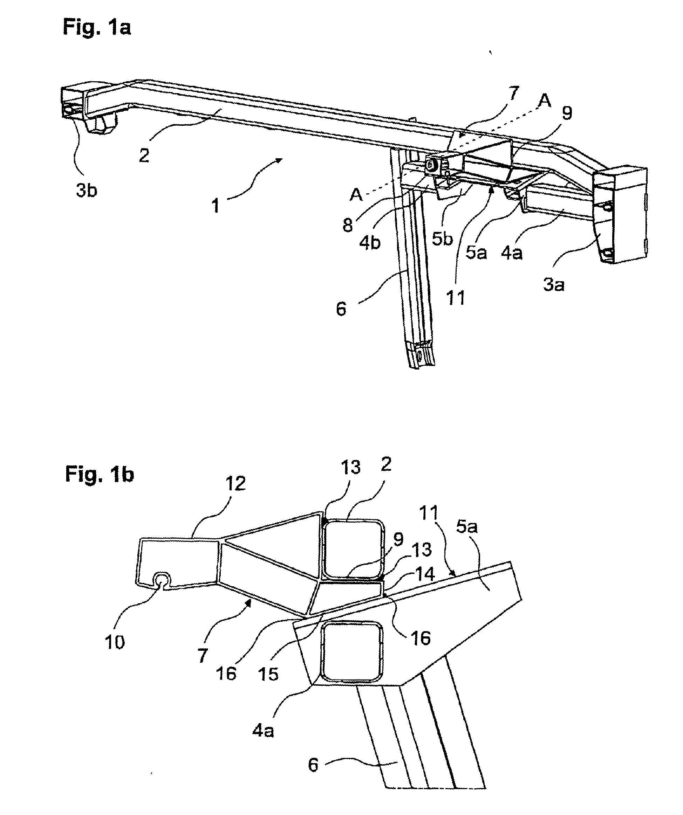

Die Instrumententafelträgerstruktur 1 gemäss Fig. 1 a und 1 b zeigt einen Hauptträger 2 aus einem Hohlprofil, welcher einer ersten Aufnahmefläche 9 am Verbindungskörper 7 flächig anliegt. Der Hauptträger 2 ist entlang der frei liegenden Kontaktlinien unter Ausbildung von Schweissnähten 13 mit dem Verbindungskörper 7 verbunden. Die Aufnahmefläche 9 ist in der Form einer rechtwinkligen Einbuchtung, welche im wesentlichen gegengleich zu der dieser anliegenden rechteckförmigen Querschnittsform des Hauptträgers 2 ist.

Der Hauptträger 2 ist über eine Schweissverbindung an erste und zweite seitliche Verbindungselemente 3a, 3b befestigt, welche wiederum an die seitliche Karosseriestruktur angebunden sind (nicht gezeigt).

Der Verbindungskörper 7 enthält ferner eine zweite, dem Fahrzeugboden zugewandte, ebene Aufnahmefläche 15, welcher ein Lagerbock 11 einer Lenksäulenanbindung mit einer Auflagefläche flächig anliegt. Der Lagerbock 11 ist entlang der frei liegenden Kontaktlinien unter Ausbildung von Schweissnähten 16 mit dem Verbindungskörper 7 verbunden. Die Lage der zweiten Aufnahmefläche 15 gibt die Neigung des Lagerbockes und somit die Ausrichtung der Lenksäule vor. Der Hauptträger 2 und der Lagerbock 15 sind über einen die beiden Aufnahmeflächen 9, 15 ausbildenden Distanzabschnitt 14 voneinander beabstandet.

Der Lagerbock 11 ist in Form eines zum Fahrzeugboden hin offenen, U-förmigen Bauteils mit zwei Seitenwänden 5a, 5b und einer die Seitenwände miteinander verbindenden Auflagefläche ausgebildet. In den Eckbereichen zwischen einer Seitenwand und der Auflagefläche ist jeweils eine versteifend wirkende Hohlkammer integriert.

Der Verbindungskörper 7 enthält im weiteren einen in Fahrzeugfrontrichtung angeordneten, armförmigen Fortsatz 12, über welche der Verbindungskörper 7 mittels eines gängigen Ausgleichselements 8 an die frontseitige Fahrzeugstruktur angebunden ist (nicht gezeigt). Der armförmige Fortsatz 12 enthält ferner eine weitere Anbindungsstelle 10 zur zusätzlichen Abstützung der Lenkeinrichtung.

An den Hauptträger 2 schliesst eine Stützstrebe 6 an, welche zum Fahrzeugboden hin verläuft und die Instrumententafel zum Fahrzeugboden hin abstützt.

Die Instrumententafelträgerstruktur 1 ist fahrerseitig über eine zusätzliche Profilstruktur verstärkt. Die Profilstruktur besteht aus einem zwischen der ersten Seitenwand 5a des Lagerbocks 11 und dem seitlichen Verbindungselement 3a angeordneten und mit diesen beiden Bauteilen verschweissten ersten Verstärkungsprofil 4a, sowie einem zwischen der Stützstrebe 6 und der zweiten Seitenwand 5b des Lagerbocks 11 angeordneten und mit diesen beiden Bauteilen verschweissten zweiten Verstärkungsprofil 4b. Die Verstärkungsprofile 4a, 4b bestehen aus Hohlprofilen.

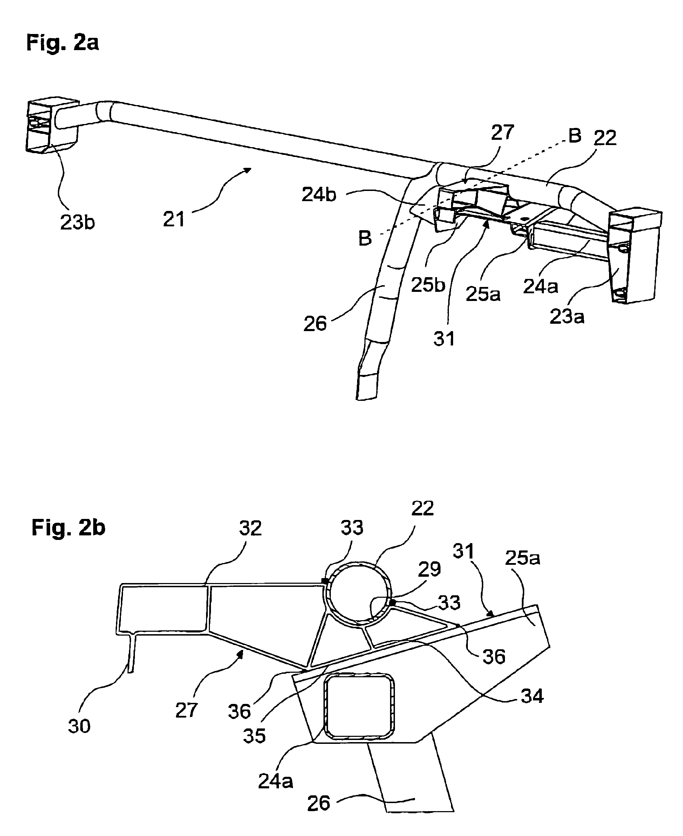

Die Instrumententafelträgerstruktur 21 gemäss der in Fig. 2a und 2b gezeigten Ausführungsform enthält einen Hauptträger 22 aus einem Hohlprofil, welcher einer ersten Aufnahmefläche 29 am Verbindungskörper 27 flächig anliegt und entlang der frei liegenden Kontaktlinien unter Ausbildung von Schweissnähten 33 mit dem Verbindungskörper 27 verbunden ist. Die Aufnahmefläche 29 ist in der Form einer konkaven Vertiefung ausgebildet, welche im wesentlichen gegengleich zu der dieser anliegenden kreisförmigen Querschnittskontur des Hauptträgers 22 ist.

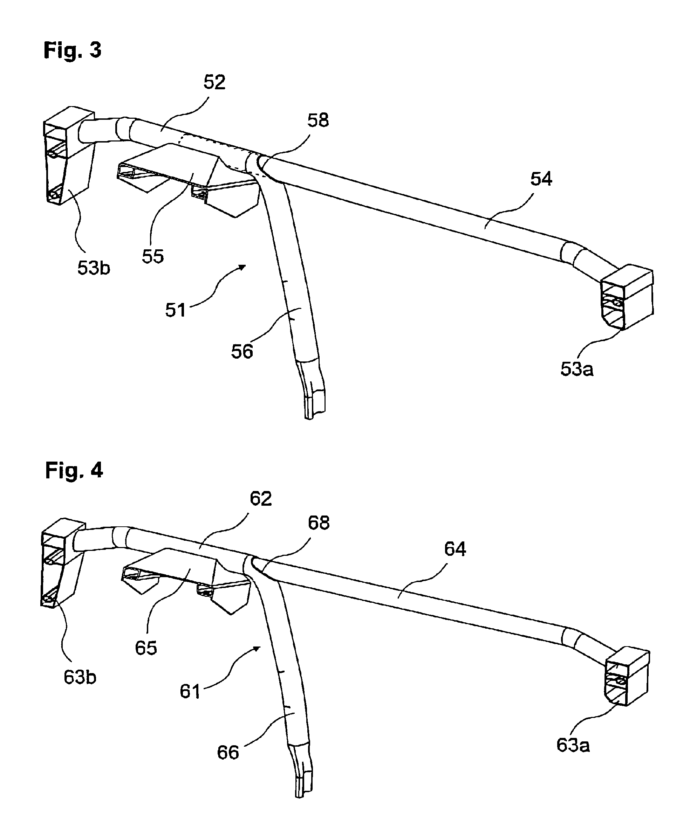

Der Hauptträger 22 ist über eine Schweissverbindung an erste und zweite seitliche Verbindungselemente 23a, 23b befestigt, welche wiederum an die seitliche Karosseriestruktur angebunden sind (nicht gezeigt). Die Bauweise des Hauptträgers 22 entspricht der in Fig. 4 beschriebenen Ausführung, auf welche hiermit verwiesen wird.

Der Verbindungskörper 27 enthält ferner eine zweite, dem Fahrzeugboden zugewandte, ebene Aufnahmefläche 35, welcher ein Lagerbock 31 einer Lenksäulenanbindung mit einer Auflagefläche flächig anliegt und entlang der frei liegenden Kontaktlinien mit dem Verbindungskörper 27 unter Ausbildung von Schweissnähten 36 verbunden ist. Die Lage der zweiten Aufnahmefläche 35 gibt die Neigung des Lagerbockes 31 und somit die Ausrichtung der Lenksäule vor. Der Hauptträger 22 und der Lagerbock 35 sind über ein die beiden Aufnahmeflächen 29, 35 ausbildenden Distanzabschnitt 34 voneinander beabstandet.

Der Lagerbock 31 ist in der Form eines zum Fahrzeugboden hin offenen, U-förmigen Bauteils mit zwei Seitenwänden 25a, 25b und einer die Seitenwände miteinander verbindenden Auflagefläche ausgebildet. In den Eckbereichen zwischen einer Seitenwand und der Auflagefläche ist jeweils eine versteifend wirkende Hohlkammer integriert.

Der Verbindungskörper 27 enthält im weiteren einen in Fahrzeugfrontrichtung angeordneten, armförmigen Fortsatz 32, über welche der Verbindungskörper 7 an die frontseitige Fahrzeugstruktur angebunden ist (nicht gezeigt). Der armförmige Fortsatz 23 enthält ferner eine weitere Anbindungsstelle 30 zur zusätzlichen Abstützung der Lenkeinrichtung.

An den Hauptträger 22 schliesst eine Stützstrebe 26 an, welche zum Fahrzeugboden hin verläuft und die Instrumententafel zum Fahrzeugboden hin abstützt. Die Stützstrebe 26 ist, wie in Fig. 4 beschrieben, ein aus dem fahrerseitigen Trägerprofil zum Fahrzeugboden hin abgewinkelter Profilabschnitt.

Die Instrumententafelträgerstruktur 21 ist fahrerseitig über eine zusätzliche Profilstruktur verstärkt. Die Profilstruktur besteht aus einem zwischen der ersten Seitenwand 25a des Lagerbocks 31 und dem seitlichen Verbindungselement 23a angeordneten und mit diesen beiden Bauteilen verschweissten ersten Verstärkungsprofil 24a, sowie einem zwischen der Stützstrebe 26 und der zweiten Seitenwand 25b des Lagerbocks 31 angeordneten und mit diesen beiden Bauteilen verschweissten zweiten Verstärkungsprofil 24b.

Die Trägerstruktur 51, 61 gemäss den Figuren 3 und 4 enthält ein fahrerseitig in Fahrzeugquerrichtung, insbesondere horizontal, verlaufendes erstes Trägerprofil 52, 62, welches unter Ausbildung eines Biegeabschnittes aus der Fahrzeugquerrichtung zum Fahrzeugboden hin abgewinkelt ist. Der abgewinkelte Profilabschnitt bildet dabei eine Stützstrebe 56, 66 zur Abstützung der Instrumententafel am Fahrzeugboden aus. Im Biegeabschnitt schliesst ein in Fahrzeugquerrichtung, insbesondere horizontal, verlaufendes, zweites Trägerprofil 54, 64 an, welches in die Beifahrerseite führt.

Im fahrerseitigen Bereich ist ein Lagerbock 55, 65 zur Anbindung einer Lenkeinrichtung vorgesehen. Die Trägerstruktur 51, 61 ist an seitliche Verbindungselemente 53a, 53b; 63a, 63b angeschweisst, welche wiederum an die seitliche Fahrzeugkarosserie angebunden werden (nicht gezeigt).

In einer ersten Ausführungsform gemäss Fig. 3 weist das erste Trägerprofil 52 der Trägerstruktur 51 im Biegeabschnitt eine Öffnung auf, in welche das über die Beifahrerseite in Fahrzeugquerrichtung verlaufende, zweite Trägerprofil 54 eingeführt ist. Das zweite Trägerprofil 54 kann entlang eines Teilabschnitts oder über die Gesamterstreckung des ersten Trägerprofils 52 in Letzteres eingesteckt sein. Das zweite Trägerprofil 54 ist im Bereich der Öffnung am ersten Trägerprofil 52 bevorzugt durch eine umlaufende oder teilumlaufende Schweissnaht 58 mit dem ersten Trägerprofil 52 verbunden. Das erste und zweite Trägerprofil 52, 54 können jedoch auch über andere lösbaren oder nicht-lösbaren Verbindungstechniken, wie Schrauben oder Nieten, miteinander verbunden sein.

In einer zweiten Ausführungsvariante gemäss Fig. 4 ist im Biegeabschnitt des Trägerprofils 62 ein über die Beifahrerseite in Fahrzeugquerrichtung, insbesondere horizontal, verlaufendes, zweites Trägerprofil 64 befestigt, wobei das zweite Trägerprofil 64 mit seiner Stirnseite dem Biegeabschitt des ersten Trägerprofils 62 anliegt. Die dem ersten Trägerprofil 62 anliegende Stirnseite des zweiten Trägerprofils 64 ist der Kontur des ersten Trägerprofils 62 im Biegeabschnitt entsprechend zugeschnitten und dieser angepasst, so dass sich eine möglichst umlaufende Kontaktlinie zwischen der Stirnseite des zweiten Trägerprofils 64 und der Kontur des ersten Trägerprofils 62 ergibt. Das zweite Trägerprofil 64 ist unter Ausbildung einer umlaufenden Schweissnaht 68 entlang der Kontaktlinie mit dem ersten Trägerprofil 62 verschweisst.

## Patentansprüche

1. Instrumententafelträgerstruktur (1) eines Kraftfahrzeuges, enthaltend eine an die beiden seitlichen Fahrzeugstrukturen angebundene Querträgerstruktur, mit einem im fahrerseitigen Bereich verlaufenden Hauptträger (2), einen fahrerseitig angeordneten Lagerbock (11) zur Anbindung einer Lenkeinrichtung sowie einen Verbindungskörper (7) zur Anbindung der Querträgerstruktur an eine frontseitige Fahrzeugstruktur,
**dadurch gekennzeichnet, dass**
der Verbindungskörper (7) eine erste Aufnahmefläche (9) ausbildet, welche der Hauptträger (2) flächig anliegt, und eine zweite Aufnahmefläche (15) ausbildet, welcher der Lagerbock (11) flächig anliegt, wobei der Hauptträger (2) und Lagerbock (11) über eine lösbare oder nicht lösbare Verbindung (13, 16) mit dem Verbindungskörper (7) verbunden sind, und der Verbindungskörper (7) zur Fahrzeugfront hin einen verlängerten Fortsatz (12) zur Anbindung an eine frontseitige Fahrzeugstruktur enthält.

2. Instrumententafelträgerstruktur nach Anspruch 1, wobei der Verbindungskörper (7) einen die erste und zweite Aufnahmefläche (9, 15) ausbildenden Distanzabschnitt (14) enthält, welcher zwischen dem Hauptträger (2) und dem Lagerbock (11) angeordnet ist und die beiden Bauteile voneinander beabstandet.

3. Instrumententafelträgerstruktur nach einem der Ansprüch 1 bis 2, wobei der Verbindungskörper (7) ein Strangpressprodukt aus einem Mehrkammerhohlprofil aus Leichtmetall, insbesondere aus Aluminium oder einer Aluminiumlegierung, mit einer im wesentlichen in Fahrzeugquerrichtung verlaufenden Pressrichtung ist.

4. Instrumententafelträgerstruktur nach einem der Ansprüche 1 bis 3, wobei die erste Aufnahmefläche (9) im wesentlichen die Kontur der dem Verbindungskörper (7) anliegenden Aussenfläche des Hauptträgers (2) wiedergibt.

5. Instrumententafelträgerstruktur nach einem der Ansprüche 1 bis 4, wobei die zweite Aufnahmefläche (15) die Kontur der dem Verbindungskörper (7) anliegenden Aussenfläche des Lagerbocks (11) wiedergibt.

6. Instrumententafelträgerstruktur nach einem der Ansprüche 1 bis 5, wobei die zweite Aufnahmefläche (15) eine im wesentlichen ebene Fläche ausbildet, deren Neigung die Ausrichtung des Lagerbocks (11) und somit der Lenkeinrichtung vorgibt.

7. Instrumententafelträgerstruktur nach einem der Ansprüche 1 bis 6, wobei der Hauptträger (2) und/oder der Lagerbock (11) über eine Schweissverbindung (13, 16) entlang ihrer frei liegenden Kontaktlinien mit dem Verbindungskörper (7) verbunden sind.

8. Instrumententafelträgerstruktur nach einem der Ansprüche 1 bis 7, wobei der Verbindungskörper (7) mittels Schraubverbindung, insbesondere mittels eines Ausgleichselementes, an die frontseitige Fahrzeugstruktur angebunden ist.

9. Instrumententafelträgerstruktur (51, 61) eines Kraftfahrzeugs, enthaltend ein fahrerseitig in Fahrzeugquerrichtung verlaufendes erstes Trägerprofil (52, 62), welches unter Ausbildung eines Biegeabschnittes aus der Fahrzeugquerrichtung zum Fahrzeugboden hin abgewinkelt ist, wobei der abgewinkelte Profilabschnitt eine Stützstrebe (56, 66) ausbildet, und ein über die Beifahrerseite in Fahrzeugquerrichtung verlaufendes, zweites Trägerprofil (54, 64),
**dadurch gekennzeichnet, dass**
das zweite Trägerprofil (54, 64) mit dem ersten Trägerprofil (52, 62) im Biegeabschnitt unter Ausbildung einer umlaufenden oder teilumlaufenden Schweissnaht verbunden ist.

10. Instrumententafelträgerstruktur (51) nach Anspruch 9, wobei das erste Trägerprofil (52) im Biegeabschnitt eine Öffnung aufweist, durch welche das zweites Trägerprofil (54) wenigstens über einen Teilabschnitt in das erste Trägerprofil eingeschoben ist, und das zweite Trägerprofil (54) durch eine umlaufende oder teilumlaufende Schweissverbindung (58) entlang der Kontaktlinie im Bereich der Öffnung mit dem ersten Trägerprofil (52) verbunden ist.

11. Instrumententafelträgerstruktur (61) nach Anspruch 9, wobei das zweite Trägerprofil (64) mit seiner Stirnseite dem ersten Trägerprofil (62) im Biegeabschnitt anliegt und die Stirnseite des zweiten Trägerprofils (64) unter Ausbildung einer umlaufenden Kontaktlinie entsprechend der Kontur des ersten Trägerprofils (62) im Biegeabschnitt zugeschnitten und unter Ausbildung einer umlaufenden Schweissnaht (68) entlang der Kontaktlinie mit dem ersten Trägerprofil (62) verschweisst ist.
